# EUROPÄISCHE PATENTANMELDUNG

(11) **EP 4 215 353 A1**
(43) Veröffentlichungstag der Anmeldung: **26.07.2023**
(21) Anmeldenummer: 22211756.6
(22) Anmeldetag: 06.12.2022
(51) Int. Cl.: B31D 5/00, B31D 3/00, B31D 5/02, B31F 1/07, B32B 29/00, B32B 29/08, B31F 5/04, B31F 1/36

(54) **VERFAHREN UND VORRICHTUNG ZUR HERSTELLUNG EINES FLÄCHIGEN POLSTERMATERIALS AUS PAPIER, SOWIE POLSTERMATERIAL**

(30) Priorität: 03.01.2022 DE 102022100057
(71) Anmelder: Dörmer, Frank, 72770 Reutlingen (DE)
(72) Erfinder: Dörmer, Frank, 72770 Reutlingen (DE)
(74) Vertreter: Christ, Niko

(57) **Zusammenfassung**

Es ist bereits bekannt, anstelle von Blisterfolien Papierprodukte einzusetzen, welche mit beidseitigen Prägungen ein Raumgefüge erhalten, so dass diese als Füll- und Polstermaterial eingesetzt werden können. Hierbei ist es allerdings schon bei kurzfaserigem Papier problematisch, dass dieses beim Prägevorgang reißt. Bei Papier mit längeren Fasern, insbesondere bei Recyclingpapier, ist der Zusammenhalt nicht ausreichend. Bekannt ist deshalb zudem, das Papier mit Wasser zu benetzen. Dies stellt jedoch einen umständlichen Arbeitsschritt dar. Die Erfindung soll diesen Schritt erheblich vereinfachen.

Dies gelingt, indem ein Auftragwerk eingesetzt wird, um das Wasser aufzutragen. Wie Tinte kann das Wasser auf dem Papier ausgebracht werden, um dieses für den Prägevorgang ausreichend feucht zu halten. Ebenfalls ist es möglich, Tinte einzusetzen, um einen flächigen Druck aufzubringen, wodurch ebenfalls eine ausreichende Benetzung erfolgen kann, jedoch gleichzeitig ein optischer Effekt erzielt wird.

## Beschreibung

Die vorliegende Erfindung betrifft ein Verfahren zur Herstellung eines flächigen Polstermaterials aus Papier, wobei das Papier mit einer Flüssigkeit benetzt und, vorzugsweise in Form von Endlospapier, zwischen zwei Prägemitteln einer Prägepresse hindurchgeführt wird und die Prägemittel einander abwechselnde Erhebungen und Kavitäten als Prägeelemente aufweisen, welche jeweils derart zueinander komplementär sind, dass die Prägemittel als Matrize und Patrize ineinandergreifen, sowie eine Vorrichtung hierfür und eine Verwendung eines Auftragwerks zum Auftragen oder Beschichten einer Flüssigkeit auf ein zu prägendes Papier. Ebenfalls betrifft die Erfindung ein derartiges Polstermaterial.

Ein derartiges Verfahren ist bereits aus der US 2021 / 0 078 280 A1 vorbekannt. Des Weiteren wird auf die DE 43 02 316 C1, DE 10 2008 039 550 A1 und die EP 0 463 213 A1 verwiesen.

In der CN 214567598 wird beschrieben, dass ein flexibles Verpackungsmaterial aus zwei außenliegenden Papierschichten und einer innenliegenden Schicht besteht, wobei die innenliegende Schicht Prägungen aufweist, wodurch die beiden außenliegenden Papierschichten beabstandet, jedoch dennoch stabil gelagert sind und dadurch ein gepolstertes Material entsteht.

Ganz allgemein ist auch aus der DE 10 2008 039 550 A1 ein vergleichbares Polstermaterial und ein Verfahren zur Herstellung eines solchen Polstermaterials beschrieben. Hierbei wird das als Ausgangsmaterial verwendete Papier zunächst geknüllt und dann in Kissen-, Spiral- oder Kugelform gebracht und nach Bedarf bedruckt.

Hinsichtlich weiterer vergleichbarer Produkte, etwa mit zylindrischer Prägung ist auf die US 3,977,928 A, die CN 213924611 U, die JP 2008 100758 A und die US 2018/ 0134476 A1 hinzuweisen.

Grundsätzlich ist es bekannt, bekannte Blisterfolien, die aus Kunststoff mit Lufteinschlüssen besteht, gegen umweltfreundlichere Materialien zu ersetzen. Blisterfolie wird als Füllmaterial für Pakete und als schlagabsorbierendes Verpackungsmaterial verwendet. Von außen einwirkende Stöße werden durch die Lufteinschlüsse absorbiert und abgefedert. Um jedoch weniger Kunststoffabfall zu erzeugen, werden unterdessen Papierprodukte eingesetzt, welche verrottbar und aus Naturprodukten herstellbar sind. In seinem Normalzustand ist Papier allerdings nicht zum Absorbieren von Schlägen geeignet. Vielmehr muss bei einem in Papier eingewickelten Gegenstand zwar nicht mit Kratzern, doch aber mit Schlägen gerechnet werden, so dass ein weiterer Bearbeitungsschritt erforderlich ist, um aus Papier ein geeignetes Polstermaterial zu erstellen.

So ist bereits seit langer Zeit Pappe bekannt, die aus mehreren Schichten besteht, von denen wenigstens eine gewellt ist. Die wenigstens eine gewellte Schicht ist zwischen zwei äußeren Schichten verklebt und sorgt für eine räumliche Verbreiterung, wobei das Papier nachgeben und der Zwischenraum als Schlagabsorptionsraum dienen soll.

Entsprechend kann auch mit Papier verfahren werden. Hierbei ist aus der DE 10 2008 039 550 A1 bekannt, das Papier zu knüllen und dann zu formen. Hierbei kann, wie beim Kunststoff, ein Aufdruck auf dem fertigen Produkt angebracht werden. Auch eine reine Prägung von an sich einlagigem Papier mit abwechselnden Ein- und Auswölbungen, also aus der Papierebene in beide Richtungen aufgeworfene Raumelemente, ist bekannt, wobei zur zusätzlichen Stabilisierung ein Knüllvorgang vorangestellt werden kann. Hierdurch wird das Papier zumindest stellenweise mehrlagig und dadurch stabiler. Derartige, Eierschachteln nicht unähnliche Papierbögen können dann leicht als Füllmaterial eingesetzt werden und füllen erheblich mehr Raum als ein normaler Papierbogen, wobei zudem nur sehr wenig Gewicht benötigt wird, um die Füll- und Stützfunktion zu leisten.

Allerdings ist eine Strukturprägung mit einer effektiven Auswölbung, welche für genügend raumgreifende Polsterelemente sorgt, für das Material sehr belastend. Bei dem Prägevorgang wird das Papier gedehnt und dabei ausgedünnt und kann reißen. Schon bei kurzfaserigem Papier kann dies der Fall sein. Bei Recyclingpapieren mit unbestimmten Faserlängen geben die einzelnen Fasern der Zugbelastung nicht nach und das Papier neigt dazu, zu reißen.

Dem kann dadurch begegnet werden, dass eine Benetzung des Papiers mit Wasser vorgenommen wird. Der Faserverbund weicht hierdurch auf und erlauben eine größere Zugdehnung, ohne zu zerreißen. Allerdings stellt die Applikation des Wassers, gegebenenfalls in Form von Dampf, einen zusätzlichen Arbeitsschritt dar, welcher derzeit umständlich in einem händischen Vorgang geleistet werden muss.

Vor diesem Hintergrund liegt der vorliegenden Erfindung die Aufgabe zu Grunde, ein Verfahren und eine Vorrichtung zur Herstellung eines flächigen Polstermaterials aus Papier zu schaffen, welche die Benetzung des Papiers vereinfacht und das Polstermaterial zusätzlich aufwertet.

Dies gelingt durch ein Verfahren zur Herstellung eines flächigen Polstermaterials aus Papier gemäß den Merkmalen des unabhängigen Anspruchs 1. Weiter gelingt dies durch eine Vorrichtung zur Herstellung eines flächigen Polstermaterials aus Papier gemäß den Merkmalen des nebengeordneten Anspruchs 11.

Schließlich gelingt dies auch durch die Verwendung eines Auftragwerks zum Auftragen einer Flüssigkeit als vollflächige oder flächengemusterte Benetzung eines Papiers gemäß dem abermals nebengeordneten Anspruchs 17 und das hieraus entstehende Polstermaterial gemäß dem nebengeordneten Anspruch 18. Sinnvolle Weiterbildungen der Verfahren und Vorrichtungen, sowie des Produkts können den sich jeweils anschließenden abhängigen Ansprüchen entnommen werden.

Erfindungsgemäß sieht ein Verfahren zur Herstellung eines flächigen Polstermaterials aus Papier vor, dass das Papier mit einer Flüssigkeit benetzt und, vorzugsweise in Form von Endlospapier, zwischen zwei Prägemitteln einer Prägepresse hindurchgeführt wird und die Prägemittel Erhebungen und Kavitäten, vorzugsweise einander abwechselnd, als Prägeelemente aufweisen, welche jeweils derart zueinander komplementär sind, dass die Prägemittel als Matrize und Patrize ineinandergreifen, wobei die Benetzung mit der Flüssigkeit durch ein Auftragwerk erfolgt, mit welchem die Flüssigkeit in einem der Prägung vorangehenden Schritt vollflächig oder in einem Flächenmuster aufgebracht wird.

Durch das Aufbringen einer Flüssigkeit auf dem Papier weicht dieses geringfügig auf und erlaubt dadurch ein Prägen vergleichsweise hoher Aufwölbungen ohne zu reißen. Die Verwendung eines Auftragwerks, insbesondere eines Leimwerks oder Druckwerks, sorgt hierbei sowohl für eine vollständig automatisierbare Applikation, als auch für eine gleichmäßige und gute Dosierung. Darüber hinaus kann die Applikation durch allgemein verfügbare Maschinen erfolgen, so dass eine Sonderkonstruktion entfallen kann. Hierbei ist lediglich eine geeignete Flüssigkeit in dem Auftragwerk vorzuhalten und auf dem Papier auszubringen. Bei einer solchen Flüssigkeit kann es sich sowohl um Wasser, als auch um eine Tinte oder eine Druckfarbe handeln, sowie auch um einen Leim oder Klebstoff. Dies kann in an sich bekannter Weise entweder durch die Applikation auf einer durchgehenden Fläche, oder durch den Auftrag in Form eines Flächenmusters erfolgen. Ein Flächenmuster kann hierbei sowohl regelmäßig als auch unregelmäßig, eine Wiederholung von Abschnitten oder ein einmaliger Abschnitt sein. Es kann aus Abschnitten mit und ohne Flüssigkeit bestehen oder auch aus Abschnitten mit einer oder mehreren Schichten von Flüssigkeit.

In diesem Zusammenhang ist unter Papier ganz allgemein ein bahnförmiges Ausgangsmaterial zu verstehen, welches aus Fasermaterial besteht. Hierbei kann der Zellstoff zu einem Faserverbund zusammengeführt sein und das Material aus Cellulosefasern, insbesondere aus Bambusfasern oder Grasfasern, bestehen.

Besonders bevorzugt kann die Benetzung mit Tinte in einer oder mehreren Farben und/oder mit Wasser erfolgen. Im Fall einer Benetzung mit Tinte in einer oder mehreren Farben können Bilder und Schriften, oder auch Muster wie etwa Tapetenmuster, Schraffuren, geometrische Muster und dergleichen mehr gewählt werden. Wasser kann hingegen vor allem flächig oder in Mustern ausgebracht werden. Hierzu wird das Wasser prinzipiell wie Tinte behandelt, also in Flüssigkeitstanks vorgehalten und über Patronen oder Düsen aufgetragen. Das Papier, beispielsweise in Form von Endlospapier von der Rolle, wird durch den Eingriffsbereich des Auftragwerks gefördert, wobei die Flüssigkeit appliziert wird.

Weiter kann die Flüssigkeit mithilfe einer Heizeinrichtung, vorzugsweise eines Durchlauferhitzers, erwärmt werden. Die Wärme sorgt dafür, dass die Flüssigkeit besser in das Papier dringt. Neben einer Beheizung der Flüssigkeit selbst kann alternativ oder ergänzend auch eine Beheizung der Prägemittel erfolgen, welche etwa durch darin eingebrachte Heizelemente erfolgen kann. Auch eine joulesche Heizung oder eine induktive Erwärmung der Prägemittel kann bedarfsweise vorgesehen werden.

Weiter sieht das Verfahren als bevorzugte Ausgestaltung vor, dass es sich bei dem Papier um ein Papier mit unbestimmter Faserlänge, vorzugsweise um Recyclingpapier, handeln kann. Dieses kann aufgrund der Benetzung mit Flüssigkeit ebenfalls bearbeitet werden und weist aufgrund seiner Herstellung aus Altpapier und wiederverwendetem Material einen positiven ökologischen Fußabdruck auf. Zudem verfestigen sich die einmal gelösten und neu verpressten langen Fasern des Recyclingpapiers zu einem widerstandsfähigeren Verbund als dies bei kürzeren Fasern der Fall ist.

Weiter bevorzugt kann das Papier vor oder nach dem Druck, jedoch vor der Prägung in der Prägepresse, in einem Knüllwerk oder Faltwerk geknüllt bzw. gefaltet werden. Dies hat den Vorteil, dass bereits eine Mehrlagigkeit vor dem Auftragwerk und der Prägepresse gegeben ist, so dass das entstehende Polstermaterial widerstandsfähiger wird.

In konkreter Ausgestaltung kann das Papier weiter nach dem Knüllvorgang gewalzt, danach bedruckt und schließlich geprägt werden. Beim Knüllvorgang wird das Papier in der Breite gestaucht und wirft dabei Falten. Durch das Walzen wird das Papier wieder flächig und kann in diesem Zustand unproblematisch im Auftragwerk bedruckt und benetzt werden. Auch wenn ein optisch ansprechendes Muster gedruckt werden soll, so kann dies aufgrund des Walzvorgangs ausreichend auf dem Papier fixiert werden, auch wenn dies zunächst geknüllt wurde und dadurch stellenweise mehrlagig vorliegt.

In abermals vorteilhafter Ausgestaltung kann es sich bei den Prägeelementen um einander abwechselnde Kugelkalotten und komplementäre Kugelkavitäten handeln. Die konkrete Form von Kugelkalotten erlaubt eine Prägung, bei welcher die Auswölbungen eine möglichst anschmiegsame Form erhalten und dass gleichzeitig keine zu großen Gradienten in der Topographie der Prägungen auftreten, welche für zu große Spannungen während des Prägevorgangs sorgen würden. Durch die gleichmäßigen Anstiege und Abfälle in den Konturen der Prägungen wird zudem eine hohe Stabilität erreicht. Alternativ können jedoch auch andere komplementäre Formen gewählt werden, insbesondere aber nicht ausschließlich Pyramiden, Pyramidenstümpfe, Kegel, Kegelstümpfe oder Zylinder.

Es kann in einer besonders vorteilhaften Ausgestaltung zudem vorgesehen sein, dass zwei Schichten des wie vorstehend beschrieben hergestellten Polstermaterials miteinander zu einem Schichtverbund verklebt werden. Hierzu wird entweder ein Klebemittel, insbesondere Leim oder Klebstoff, in dem Auftragwerk aufgetragen oder es erfolgt in einem zusätzlichen Auftragwerk, insbesondere einem Leimwerk, eine zweite Beschichtung. Ein solches zusätzliches Auftragwerk kann der Prägepresse nachgeordnet sein und trägt das Klebemittel um die Aufwölbungen des Polstermaterials herum auf. Die Aufwölbungen sind in einem solchen Fall allerdings nur auf einer Seite vorhanden. Eine zweite Schicht aus Polstermaterial kann in diesem Fall auf der ersten Schicht appliziert und verklebt werden, wobei diese vorzugsweise spiegelbildlich zu der ersten Schicht angeordnet sein kann. Durch das spiegelbildliche Verdrehen geraten die Auswölbungen übereinander und ergänzen sich zu einem Lufteinschluss.

Weiter vorgesehen ist eine Vorrichtung zur Herstellung eines flächigen Polstermaterials aus Papier, umfassend eine Papierzuführung, welche eine Prägepresse mit dem Papier, vorzugsweise in Form von Endlospapier, beschickt, wobei das Papier in der Prägepresse zwischen zwei Prägemitteln hindurchgeführt wird, welche einander abwechselnde Erhebungen und Kavitäten als Prägeelemente aufweisen und zueinander komplementär sind, wobei der Prägepresse ein Auftragwerk vorgeschaltet ist, auf welchem das Papier mit einer Flüssigkeit vollflächig oder in einem Flächenmuster benetzbar ist, wobei es sich bei der Flüssigkeit um Tinte beziehungsweise Druckfarbe in einer oder mehreren Farben und Wasser, oder ausschließlich um Wasser, sowie gegebenenfalls um eine geeignete Flüssigkeit zum Lösen und wiedervernetzen der Fasern handelt.

Eine solche Vorrichtung erlaubt die Herstellung des Polstermaterials von dem glatten Papier-Rohmaterial aus. Sowohl eine Benetzung mit Wasser als auch ein Bedrucken mit einem vollflächigen Druck oder einem Flächenmuster ist hiermit möglich.

Konkret können dem Auftragwerk beheizbare Flüssigkeitstanks zugeordnet sein, so dass direkt eine erwärmte oder erhitzte Flüssigkeit auf das Papier ausgebracht werden kann.

Besonders vorteilhaft kann dem Auftragwerk eine Leitung zum Herbeiführen der Flüssigkeit aus einem Versorgungsnetz zugeordnet sein. Hierbei handelt es sich im Prinzip um Flüssigkeit aus einem Wasseranschluss, welcher direkt mit einem Flüssigkeitstank des Auftragwerks verbunden sein kann. Hieraus kann das Auftragwerk das Wasser wiederum ansaugen und auf dem Papier ausbringen. Um das Wasser hierbei gezielt zu temperieren, kann der Leitung ein Durchlauferhitzer zugeordnet sein. Mithilfe eines Temperaturreglers kann eine geeignete Temperatur vorgegeben werden, bei welcher die Fasern des benetzten Papiers ideal angelöst werden. Des weiteren können in dem Auftragswerk etwa der Farbkasten oder die Auftragswalzen geregelt beheizt sein.

Auch den Prägemitteln der Prägepresse können zudem Heizelemente zugeordnet sein. Hierdurch erfolgt die Prägung des Papiers ebenfalls unter Hitzeeinwirkung, welche die Fasern des Papiers neben der kraftschlüssigen Verpressung auch aufgrund der Hitzeeinwirkung schnell trocknet und miteinander in der durch die Prägepresse vorgegebenen Form verbackt.

Bevorzugtermaßen kann weiter zwischen der Papierzuführung und dem Auftragwerk oder zwischen dem Auftragwerk und der Prägepresse ein Knüllwerk zum Knüllen des Papiers angeordnet sein. Ein solches Knüllwerk sorgt dafür, dass das zugeführte Papier aufgrund des Knüllvorgangs zumindest stellenweise mehrlagig vorliegt und dadurch zusätzlich an Stabilität gewinnt.

Bei den Prägemitteln kann es sich ferner mit besonderem Vorteil um Prägewalzen handeln, zwischen welchen das Papier hindurchgeführt und geprägt wird, oder um Prägeplatten, welche sich um das zwischengeführte Papier herum schließen und hierbei einen Abschnitt des zwischen den Prägeplatten hindurchgeführten Papiers zwischen sich einschließen.

Besonders bevorzugt ist nach alledem die Verwendung eines Auftragwerks zum Auftragen einer Flüssigkeit, vorzugsweise von Wasser, als vollflächige oder flächengemusterte Benetzung eines Papiers, vorzugsweise eines Endlospapiers, vor dessen Zuführung in eine Prägepresse.

Erfindungsgemäß ist ebenfalls ein flächiges Polstermaterial mit einer Papierstruktur vorgesehen, umfassend eine wenigstens einseitig geprägte erste Papierschicht, welche geformte, vorzugsweise sphärische, Prägungen aufweist, wobei die Papierstruktur wenigstens eine, wenigstens einseitig geprägte zweite Papierschicht aufweist, welche unter Zwischenlage wenigstens einer Klebemittelschicht mit der ersten Papierschicht unlösbar verbunden ist.

Es wird also zunächst, wie vorstehend beschrieben, ein einschichtiges Polstermaterial hergestellt und dieses dann zu mehreren zusammengeklebt. Hieraus entsteht ein Flächengebilde, das aufgrund der sich addierenden Raumhöhe letzthin beliebig dick und dadurch trotz der mit jeder Schicht zunehmend raumgreifenden Größe starr sein kann. Je nach Stärke des Papiers und der Abstände der Zwischenräume können hierbei nahezu beliebige Körper erstellt, gegebenenfalls auch aus einem Block ausgeschnitten oder ein solcher Block direkt maschinell aus zugeschnittenen Bögen hergestellt werden.

Soweit eine Verklebung nur entlang einer Kante, vorzugsweise aber entlang zweier oder idealerweise dreier Kanten erfolgt, entsteht aus den beiden Papierschichten eine Einsteckhülle oder eine Tasche, welche als Schutzhülle für geschützt zu transportierende Produkte verwendet werden kann.

Weiter kann ein solches Polstermaterial zwischen der wenigstens einen ersten Papierschicht und der wenigstens einen zweiten Papierschicht wenigstens eine flache Zwischenschicht zwischengelegt haben. Hierdurch wird der Konstruktion eine zusätzliche Steifigkeit gegeben, da ein Rundbiegen eines Bogens durch die Fixierung an der Zwischenschicht erschwert wird.

Weiter ist es möglich, das Polstermaterial so auszugestalten, dass die Prägungen der wenigstens einen ersten und der wenigstens einen zweiten Papierschicht einander spiegelbildlich angeordnet sind und sich zu einer gemeinsamen, gegebenenfalls von einer Zwischenschicht durchzogenen, Kavität ergänzen. Die hierdurch entstehenden Blasen sorgen in besonderem Maße für Festigkeit, weil die jeweiligen Ränder der Prägungen aufeinanderliegen und sich gegenseitig stützen.

Zudem kann das Polstermaterial vorsehen, dass die erste Papierschicht und die zweite Papierschicht unterschiedliche Materialien und/oder unterschiedliche Dichten aufweisen. Hierdurch kann beispielsweise eine erste, weichere und schonendere Auflageseite, welche ein verpacktes Produkt kontaktieren soll und eine zweite, stabilere und stärkere Schutzseite geschaffen werden, welche mechanische Kontakte von dem verpackten Produkt weg halten soll.

Ergänzend können die erste Papierschicht und die zweite Papierschicht in unterschiedlichen Farben eingefärbt und/oder mit einem Druck in unterschiedlichen Farben versehen sein. Die Formulierung einer unterschiedlichen Einfärbung oder eines unterschiedlichen Drucks ist hierbei so zu verstehen, dass auch eine der Papierschichten eingefärbt oder bedruckt sein kann und die andere nicht. Die unterschiedliche Farbgebung bedeutet einerseits eine optische Aufwertung, kann aber insbesondere bei unterschiedlichen Eigenschaften der beiden Papierschichten auch eine Vereinfachung der Handhabung bedeuten.

Die vorstehend beschriebene Erfindung wird im Folgenden anhand eines Ausführungsbeispiels näher erläutert.

Es zeigen
- Figur 1: eine Vorrichtung zur Herstellung eines Polstermaterials aus Endlospapier mit mehreren Bearbeitungsstationen in einer schematischen Darstellung,
- Figur 2: ein zu einem Polstermaterial verarbeitetes Endlospapier in einer schematischen Draufsicht von oben, sowie
- Figur 3: ein durch eine Prägepresse geführtes, verarbeitetes Endlospapier in einer schematischen seitlichen Darstellung.

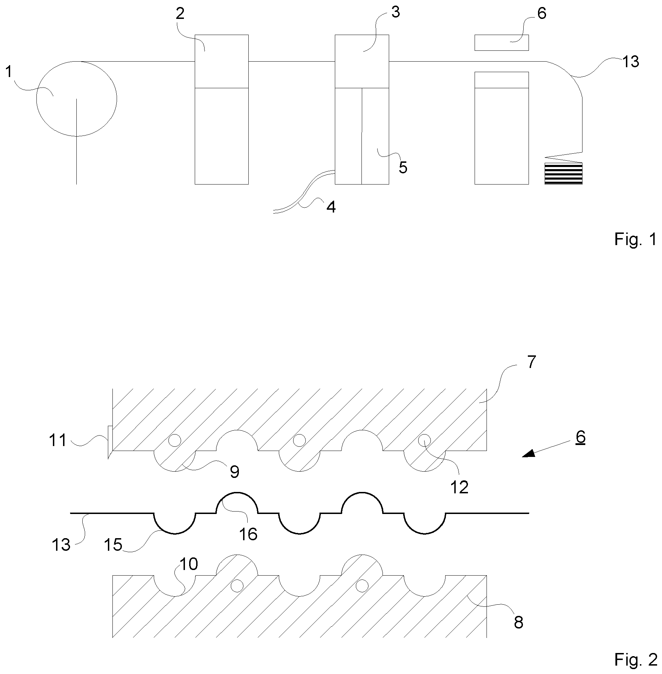

Figur 1 zeigt eine schematische Darstellung eines Herstellungsprozesses zur Herstellung eines Polstermaterials aus einem Papier. Das Papier ist zunächst als Rohmaterial auf einer Papiertrommel 1 aufgenommen und liegt als Endlospapier 13 vor. Dieses wird von der Papiertrommel 1 aus zunächst durch ein Knüllwerk 2 hindurchgeführt. In dem Knüllwerk 2 wird das Endlospapier 13 zunächst seitlich gestaucht, so dass es Falten wirft und hierbei ein schmaleres Format annimmt. Mithilfe einer Walze innerhalb des Knüllwerks 2 wird das in Falten geworfene Endlospapier 13 wieder platt zusammengedrückt, wobei es unregelmäßig stellenweise mehrlagig und hierdurch stabiler wird.

In einem nächsten Schritt wird das so vorbehandelte Endlospapier 13 nunmehr einem Auftragwerk 3 zugeführt. Hier kann sowohl ein Druck mit einer oder mehreren verschiedenen Flüssigkeiten auf das Papier erfolgen. Zunächst ist es möglich, in herkömmlicher Art und Weise ein Flächenmuster auf dem Endlospapier 13 aufzudrucken, welches allerdings neben dem optischen Effekt vor allem den Hintergrund hat, das Papier mit Flüssigkeit zu tränken, so dass diese in die Fasern des Papiers eindringen kann. Insbesondere bei der Verwendung von Recyclingpapier ergeben sich hierdurch Vorteile, da dieses ohne eine Benetzung in dem nächsten Schritt während einer Strukturprägung reißen könnte. In dem Auftragwerk 3 kann allerdings auch alternativ oder ergänzend eine Benetzung mit Wasser erfolgen, welches in dem Auftragwerk 3 analog zu Tinte über die Auslassdüsen auf das Papier ausgebracht werden kann. Bedarfsweise kann das Wasser auch über eine Leitung 4 aus einer Versorgungsleitung herangeführt werden. Weiter ist es in diesem Zusammenhang möglich, das Wasser mithilfe eines Durchlauferhitzers aufzuheizen, so dass die Durchdringung des Papiers aufgrund der Wärme verbessert wird.

Das auf diese Weise mit Flüssigkeit vorbehandelte, nunmehr befeuchtete Endlospapier 13 wird nachfolgend zwischen zwei Prägeplatten einer Prägepresse 6 hindurchgeführt, welche in Figur 2 näher gezeigt sind.

Die Prägeplatten sind als Matrize 7 und als Patrize 8 ausgestaltet, so dass diese komplementär ineinandergreifen und dabei das Papier, insbesondere Endlospapier 13, von beiden Seiten zwischen sich einklemmen. Hierbei wird das Endlospapier, dessen Fasern durch den vorangegangenen Druck bereits angelöst sind, neu verpresst und dabei mithilfe von in Matrize 7 und Patrize 8 geführten Heizmitteln 12 erhitzt und verbackt. Die Feuchtigkeit wird bei der Verpressung zumindest teilweise ausgetrieben und das Endlospapier in eine weitgehend steife, raumgreifende Struktur geprägt. Kugelkalotten 9 auf der Oberfläche der Prägeplatten 7, 8 verursachen hierbei in der Oberfläche des Papiers abwechselnd Auswölbungen 15 und Einwölbungen 16, während sie von der Gegenseite in der jeweils anderen Prägeplatte 8, 7 mit Kugelkavitäten 10 gestützt werden. Das entstehende Polstermaterial wird hierdurch um ein Vielfaches dicker und eignet sich aufgrund der Flexibilität hervorragend als Füllmaterial und zum Abfedern von Stößen und Schlägen gegen einen damit umwickelten Gegenstand. Mithilfe eines Perforationsmessers 11 kann dem Endlospapier eine Perforationslinie 14 zugefügt werden. Auch ein Einzelblattschnitt kann hier erfolgen.

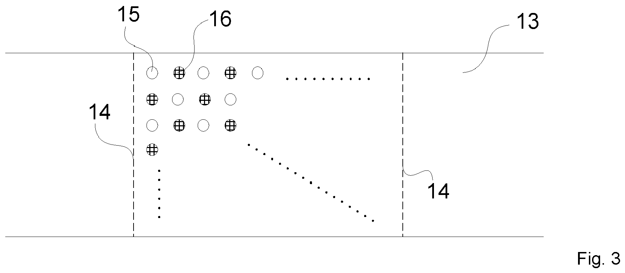

Diese ist insbesondere nochmals in Figur 3 gezeigt. Das Endlospapier 13 weist in einem zwischen den Prägeplatten 7 und 8 verpressten Abschnitt beiderseits solche Perforationslinien 14 auf und ist dazwischen in beide Flächenrichtungen abwechselnd mit Auswölbungen 15 und Einwölbungen 16 versehen. Soweit die verwendete Flüssigkeit Tinte ist, weist das Endlospapier 13 zudem einen vollflächigen Druck oder ein Flächenmuster auf, welches das Endlospapier 13 zusätzlich aufwertet.

Vorstehend beschrieben sind somit ein Verfahren und eine Vorrichtung zur Herstellung eines flächigen Polstermaterials aus Papier, welche die Benetzung des Papiers vereinfacht und das Polstermaterial zusätzlich aufwertet, sowie eine Verwendung eines Auftragwerks zur Herstellung eines solchen Polstermaterials und das entstehende Polstermaterial hierzu.

### BEZUGSZEICHENLISTE

- 1: Papiertrommel
- 2: Knüllwerk
- 3: Auftragwerk
- 4: Leitung
- 5: Flüssigkeitstank
- 6: Prägepresse
- 7: Matrize
- 8: Patrize
- 9: Kugelkalotte
- 10: Kugelkavität
- 11: Perforationsmesser
- 12: Heizelement
- 13: Endlospapier
- 14: Perforationslinie
- 15: Auswölbung
- 16: Einwölbung

## Patentansprüche

1. Verfahren zur Herstellung eines flächigen Polstermaterials aus Papier, wobei das Papier mit einer Flüssigkeit benetzt und, vorzugsweise in Form von Endlospapier (13), zwischen zwei Prägemitteln einer Prägepresse (6) hindurchgeführt wird und die Prägemittel Erhebungen und Kavitäten, vorzugsweise einander abwechselnd, als Prägeelemente aufweisen, welche jeweils derart zueinander komplementär sind, dass die Prägemittel als Matrize (7) und Patrize (8) ineinandergreifen, **dadurch gekennzeichnet, dass** die Benetzung mit der Flüssigkeit durch ein Auftragwerk (3) erfolgt, mit welchem die Flüssigkeit in einem der Prägung vorangehenden Schritt vollflächig oder in einem Flächenmuster aufgebracht oder beschichtet wird, wobei das Papier vor oder nach dem Druck, jedoch vor der Prägung in der Prägepresse (6), in einem Knüllwerk (2) geknüllt oder in einem Faltwerk gefaltet wird.

2. Verfahren gemäß Anspruch 1, **dadurch gekennzeichnet, dass** die Benetzung mit Tinte in einer oder mehreren Farben und/oder mit Wasser erfolgt.

3. Verfahren gemäß einem der Ansprüche 1 oder 2, **dadurch gekennzeichnet, dass** die Flüssigkeit mithilfe einer Heizeinrichtung, vorzugsweise eines Durchlauferhitzers, erwärmt wird.

4. Verfahren gemäß einem der vorhergehenden Ansprüche, **dadurch gekennzeichnet, dass** die Prägemittel beheizt sind.

5. Verfahren gemäß einem der vorhergehenden Ansprüche, **dadurch gekennzeichnet, dass** es sich bei dem Papier um ein langfaseriges Papier, vorzugsweise um Recyclingpapier, handelt.

6. Verfahren gemäß einem der vorhergehenden Ansprüche, **dadurch gekennzeichnet, dass** das Papier nach dem Knüllvorgang bzw. Faltvorgang gewalzt, danach bedruckt und schließlich geprägt wird.

7. Verfahren gemäß einem der vorhergehenden Ansprüche, **dadurch gekennzeichnet, dass** es sich bei den Prägeelementen um einander abwechselnde Kugelkalotten (9) und komplementäre Kugelkavitäten (10) handelt, oder um komplementäre Prägeelemente in Form von Pyramiden, Pyramidenstümpfen, Kegeln, Kegelstümpfen oder Zylindern.

8. Verfahren gemäß einem der vorhergehenden Ansprüche, **dadurch gekennzeichnet, dass** mit dem Auftragwerk (3) oder einem weiteren, der Prägepresse nachgeschalteten Auftragwerk, insbesondere einem Leimwerk, ein Klebemittel auf dem Papier aufgebracht wird, wobei in einem nachgeschalteten Verbindungsschritt zwei einseitig geprägte Schichten aus dem flächigem Polstermaterial, vorzugsweise spiegelbildlich unter Einschluss eines Raumes zwischen zwei korrespondierenden Auswölbungen (15), miteinander verbunden werden.

9. Verfahren gemäß Anspruch 8, **dadurch gekennzeichnet, dass** die Verklebung vollflächig oder entlang einer oder mehrerer Kanten, vorzugsweise entlang dreier Kanten unter Ausbildung einer Tasche, erfolgt.

10. Verfahren gemäß Anspruch 8, **dadurch gekennzeichnet, dass** die Verbindung der beiden Schichten aus flächigem Polstermaterial unter Zwischenlage wenigstens einer weiteren Papierschicht erfolgt.

11. Vorrichtung zur Herstellung eines flächigen Polstermaterials aus Papier, umfassend eine Papierzuführung, welche eine Prägepresse (6) mit dem Papier, vorzugsweise in Form von Endlospapier (13), beschickt, wobei das Papier in der Prägepresse (6) zwischen zwei Prägemitteln hindurchgeführt wird, welche einander abwechselnde Erhebungen und Kavitäten als Prägeelemente aufweisen und zueinander komplementär sind,
**dadurch gekennzeichnet, dass** der Prägepresse (6) ein Auftragwerk (3) vorgeschaltet ist, auf welchem das Papier mit einer Flüssigkeit vollflächig oder in einem Flächenmuster benetzbar ist, wobei es sich bei der Flüssigkeit um Tinte in einer oder mehreren Farben und Wasser, oder ausschließlich um Wasser handelt, wobei zwischen der Papierzuführung und dem Auftragwerk (3) oder zwischen dem Auftragwerk (3) und der Prägepresse (6) ein Knüllwerk (3) zum Knüllen und/oder ein Faltwerk zum Falten des Papiers angeordnet ist.

12. Vorrichtung gemäß Anspruch 11, **dadurch gekennzeichnet, dass** dem Auftragwerk (3) beheizbare Flüssigkeitstanks (5) zugeordnet sind.

13. Vorrichtung gemäß Anspruch 11, **dadurch gekennzeichnet, dass** dem Auftragwerk (3) eine Leitung (4) zum Herbeiführen der Flüssigkeit aus einem Versorgungsnetz zugeordnet ist.

14. Vorrichtung gemäß Anspruch 13, **dadurch gekennzeichnet, dass** der Leitung (4) ein Durchlauferhitzer zugeordnet ist.

15. Vorrichtung gemäß einem der Ansprüche 12 bis 14, **dadurch gekennzeichnet, dass** den Prägemitteln Heizelemente (12) zugeordnet sind.

16. Vorrichtung gemäß einem der Ansprüche 12 bis 15, **dadurch gekennzeichnet, dass** es sich bei den Prägemitteln um Prägeplatten oder Prägewalzen handelt.

17. Verwendung eines Auftragwerks (3) zum Auftragen einer Flüssigkeit, vorzugsweise von Wasser, als flächengemusterte Benetzung eines Papiers, vorzugsweise eines Endlospapiers (13), vor dessen Zuführung in eine Prägepresse (6).

18. Flächiges Polstermaterial mit einer Papierstruktur, umfassend eine wenigstens einseitig geprägte erste Papierschicht, welche geformte, vorzugsweise sphärische, Prägungen aufweist,
**dadurch gekennzeichnet, dass** die Papierstruktur wenigstens eine, wenigstens einseitig geprägte zweite Papierschicht aufweist, welche unter Zwischenlage wenigstens einer Klebemittelschicht mit der ersten Papierschicht unlösbar verbunden ist.

19. Polstermaterial gemäß Anspruch 18, **dadurch gekennzeichnet, dass** erste Papierschicht und die zweite Papierschicht vollflächig oder entlang einer oder mehrerer Kanten, vorzugsweise entlang dreier Kanten unter Ausbildung einer Tasche, miteinander verklebt sind.

20. Polstermaterial gemäß Anspruch 18, **dadurch gekennzeichnet, dass** der wenigstens einen ersten Papierschicht und der wenigstens einen zweiten Papierschicht wenigstens eine flache Zwischenschicht zwischengelegt ist.

21. Polstermaterial gemäß einem der Ansprüche 18 bis 20, **dadurch gekennzeichnet, dass** die Prägungen der wenigstens einen ersten und der wenigstens einen zweiten Papierschicht einander spiegelbildlich angeordnet sind und sich zu einer gemeinsamen, gegebenenfalls von einer Zwischenschicht durchzogenen, Kavität ergänzen.

22. Polstermaterial gemäß einem der Ansprüche 18 bis 21, **dadurch gekennzeichnet, dass** die erste Papierschicht und die zweite Papierschicht unterschiedliche Materialien und/oder unterschiedliche Dichten aufweisen.

23. Polstermaterial gemäß einem der Ansprüche 18 bis 22, **dadurch gekennzeichnet, dass** die erste Papierschicht und die zweite Papierschicht in unterschiedlichen Farben eingefärbt sind und/oder mit einem Druck in unterschiedlichen Farben versehen sind.
